# EUROPÄISCHE PATENTSCHRIFT

(11) **EP 0 666 478 B1**
(45) Veröffentlichungstag und Bekanntmachung des Hinweises auf die Patenterteilung: **06.05.1998**
(21) Anmeldenummer: 95100328.4
(22) Anmeldetag: 12.01.1995
(51) Int. Cl.: G01P 1/00, G01P 3/488

(54) **Vorrichtung zur Impulserzeugung an Fahrzeugrädern**
Pulse generating device for vehicle wheels
Dispositif générateur d'impulsions pour roues de véhicules

(30) Priorität: 01.02.1994 DE 4402959
(43) Veröffentlichungstag der Anmeldung: 09.08.1995
(73) Patentinhaber: BPW Bergische Achsen Kommanditgesellschaft, 51674 Wiehl (DE)
(72) Erfinder: Flick, Joachim, Dipl.-Ing., D-51674 Wiehl (DE)
(74) Vertreter: Stenger, Watzke & Ring Patentanwälte

(56) Entgegenhaltungen:
- US-A- 3 764 837
- US-A- 3 890 517
- US-A- 3 910 386

## Beschreibung

Die Erfindung betrifft eine Vorrichtung zur Impulserzeugung an Fahrzeugrädern, insbesondere für die Drehzahl- und/oder Drehrichtungserkennung, mittels eines Sensors und eines Polringes, der mit einer radial verlaufenden Planfläche zur axialen Anlage an einem mit dem Rad drehbar gelagerten Teil der Radlagerung, insbesondere an der Radnabe, Bremstrommel oder Bremsscheibe, versehen ist. Eine solche Vorrichtung ist aus US-A-3 764 837 bekannt.

Derartige Vorrichtungen zur Impulserzeugung an Fahrzeugrädern mittels eines Sensors und eines Polringes sind bekannt. Sofern der Polring an der Radnabe angeordnet wird, erfolgt seine Anordnung und Lagesicherung durch Aufschrumpfen. Ein derartiges Aufschrumpfen ist sowohl aus räumlichen als auch insbesondere aus thermischen Gründen nicht möglich, wenn der Polring an einer Bremstrommel oder einer Bremsscheibe angeordnet wird. In diesen Fällen erfolgt eine Befestigung durch Anschrauben, wobei darauf geachtet werden muß, daß durch eine Wärmeausdehnung der Bremstrommel oder der Bremsscheibe keine unerwünschte Verformung des Polringes eintritt, die entweder zu Beschädigungen des Sensors oder zum Lockern des Polringes führen kann. Um diesen Voraussetzungen Rechnung zu tragen, ist es erforderlich, sowohl den Polring als auch die Bremsscheibe bzw. die Bremstrommel aufwendig zu bearbeiten.

Der Erfindung liegt die **Aufgabe** zugrunde, eine Vorrichtung der eingangs beschriebenen Art derart weiterzubilden, daß sich bei einfacher Bearbeitung des drehbar gelagerten Teiles der Radlagerung, an dem der Polring angeordnet werden soll, eine konstruktiv einfache und eine schnelle Montage und Demontage ermöglichende Befestigung des Polringes ergibt, die einerseits keine zusätzlichen Befestigungsteile, wie Schrauben oder Federklammern erfordert und andererseits schädliche Einflüsse auf den Polring infolge einer Wärmeausdehnung des sie lagernden Teiles der Radlagerung vermeidet.

Die **Lösung** dieser Aufgabenstellung durch die Erfindung ist dadurch gekennzeichnet, daß das drehbar gelagerte Teil der Radlagerung mit einer Mehrzahl von radial verlaufenden Stegen und mit jeweils einer in jedem Steg ausgebildeten, Anlageflächen für den Polring aufweisenden Nut ausgebildet ist und daß der Polring mit bajonettartigen Vorsprüngen zur radialen und axialen Positionierung und Lagesicherung innerhalb der Nuten versehen ist.

Die Ausbildung der erfindungsgemäßen, radial verlaufenden Stege am drehbar gelagerten Teil der Radlagerung bereitet keine Probleme, da beispielsweise Bremsscheiben und Bremstrommeln mit Kühlrippen versehen sind, die zur Bildung der erfindungsgemäßen Stege lediglich geringfügig verlängert werden müssen. Eine derartige Verlängerung der vorhandenen Kühlrippen oder die Ausbildung von erfindungsgemäßen Stegen an Radnaben ist insgesamt durch eine einfache Änderung bei der Herstellung der meist gegossenen Radnaben, Bremstrommeln oder Bremsscheiben problemlos möglich. Die Bearbeitung dieser Teile zur Aufnahme des Polringes beschränkt sich auf die Ausbildung jeweils einer Nut in jedem Steg, wozu eine einfache Drehoperation der sowieso auf einer Drehmaschine zu bearbeitenden Bauteile ausreicht. Der zur radialen und axialen Positionierung und Lagesicherung innerhalb der Nuten mit bajonettartigen Vorsprüngen versehene Polring wird auf einfache Weise dadurch an dem jeweiligen Teil der Radlagerung befestigt, daß er mit zwischen den Stegen liegenden Vorsprüngen an das Teil angesetzt und anschließend derart in Umfangsrichtung verdreht wird, daß die Vorsprünge in die Nuten der Stege eingreifen. Da die Verbindung zwischen dem Polring und dem den Polring aufnehmenden Teil der Radlagerung ausschließlich über die in den Nuten der Stege ausgebildeten Anlageflächen erfolgt, werden unzulässige Erwärmungen des Polringes, insbesondere bei hoher thermischer Belastung der Bremstrommel oder Bremsscheibe ausgeschlossen. Die kleinen Kontaktflächen zwischen dem Polring und dem diesen lagernden Teil der Radlagerung verhindern schließlich unerwünschte Verformungen des Polringes, selbst wenn sich die Bremstrommel oder die Bremsscheibe aufgrund einer starken Erwärmung ausdehnt, da eine geringe Verschiebung der Bauteile zueinander möglich ist.

Insgesamt ergibt sich somit eine einfach herzustellende und funktionssichere Anordnung des Polringes am jeweiligen Teil der Radlagerung, ohne daß hierzu zusätzliche Befestigungsteile, wie Schrauben oder Federklammern notwendig sind. Durch die bajonettartige Ausbildung der Vorsprünge kann eine sehr schnelle Montage und Demontage des Polringes erfolgen, beispielsweise bei einem aufgrund von Verschleiß notwendigen Wechsel der Bremsscheibe oder Bremstrommel oder vor dem Ausdrehen von Bremstrommeln.

Gemäß einem weiteren Merkmal der Erfindung sind die Vorsprünge an einem etwa radial verlaufenden Flansch des Polringes ausgebildet und weisen eine in Umfangsrichtung kleinere Erstreckung als der Abstand zwischen den Stegen auf. Hierdurch ergibt sich eine besonders einfache Ausgestaltung der in der Art eines Bajonettes mit den Stegen zusammenwirkenden Vorsprünge.

Die Positionierung des Polringes in radialer Richtung erfolgt gemäß einem weiteren Merkmal der Erfindung durch Anlage der Mantelfläche mindestens einiger der Vorsprünge im Grund der jeweiligen Nut. Die Positionierung des Polringes in axialer Richtung wird erfindungsgemäß durch eine federnde Ausbildung mindestens einiger Vorsprünge erzielt, die auf diese Weise an gegenüberliegenden Wänden der in den Stegen ausgebildeten Nuten anliegen.

Um die gewünschte Federwirkung zu erzielen, können erfindungsgemäß mindestens einige Vorsprünge bogenartig verformt sein.

Mit der Erfindung wird schließlich vorgeschlagen, mindestens einen Vorsprung mit federzungenartigen Ausstanzungen zu versehen, die im montierten Zustand mit ihren gegeneinanderweisenden Stirnflächen an gegenüberliegenden Seiten des zugehörigen Steges anliegen und auf diese Weise eine Lagesicherung des Polringes gegen Verdrehen bewirken.

Auf der Zeichnung sind verschiedene Ausführungsbeispiele der erfindungsgemäßen Vorrichtung dargestellt, und zwar zeigen:
- Fig. 1: eine teilweise geschnittene Seitenansicht einer Radlagerung mit einer Scheibenbremse,
- Fig. 2: eine vergrößerte Darstellung der in der oberen Hälfte geschnittenen und in der unteren Hälfte in einer Seitenansicht dargestellten Bremsscheibe nach Fig. 1,
- Fig. 3: einen Querschnitt durch die Bremsscheibe gemäß der Schnittlinie III - III in Fig. 2,
- Fig. 4: eine vergrößerte Detaildarstellung gemäß der Einkreisung IV in Fig. 2,
- Fig. 5: eine Ansicht des Polringes gemäß Fig. 1 in vergrößerter Darstellung,
- Fig. 6: einen Querschnitt durch den Polring gemäß der Schnittlinie VI - VI in Fig. 5,
- Fig. 7: eine vergrößerte Detaildarstellung der Einkreisung VII in Fig. 6,
- Fig. 8: eine Ansicht eines Teiles des Polringes in Blickrichtung des Pfeiles VIII in Fig. 7,
- Fig. 9: eine weitere Ansicht eines Teiles des Polringes in Blickrichtung des Pfeiles IX in Fig. 5,
- Fig. 10: eine vergrößerte Darstellung eines Teiles der mit dem Polring gemäß den Fig. 5 bis 9 versehenen Bremsscheibe gemäß den Fig. 2 bis 4,
- Fig. 11: einen Querschnitt gemäß der Schnittlinie XI - XI in Fig. 10,
- Fig. 12: einen Querschnitt gemäß der Schnittlinie XII - XII in Fig. 10 und
- Fig. 13: einen Querschnitt gemäß der Schnittlinie XIII - XIII in Fig. 10,
- Fig. 14: zwei weitere Ausführungsbeispiele anhand einer der Fig. 1 entsprechenden Darstellung.

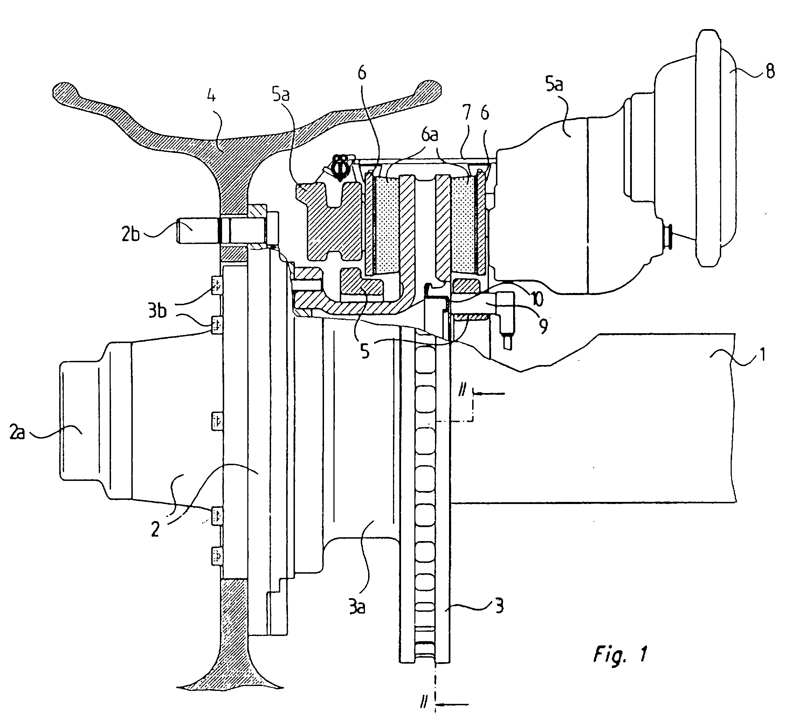

Die in Fig. 1 in einer Gesamtdarstellung gezeigte Radlagerung läßt einen Teil eines Achskörpers 1 erkennen, an dem eine Radnabe 2 drehbar gelagert ist. Diese mittels einer Lagerkappe 2a verschlossene Radnabe trägt beim Ausführungsbeispiel nach Fig. 1 eine innenbelüftete Bremsscheibe 3, die mittels eines angeformten Nabenflansches 3a durch Befestigungsschrauben 3b an der Radnabe 2 angeschraubt ist. Die Radnabe 2 ist weiterhin mit Radbolzen 2b versehen, mit denen eine Felge 4 auswechselbar an der Radnabe 2 befestigt wird.

Am Achskörper 1 ist ein Bremsrahmen 5 befestigt, der einen Bremssattel 5a umfaßt, in dem auf gegenüberliegenden Seiten der Bremsscheibe 3 jeweils ein mit einem Bremsbelag 6a versehener Bremsklotz 6 angeordnet ist. Die Bremsklötze 6 werden gegen Herausfallen aus dem Bremssattel 5a durch eine Haltefeder 7 gehalten. Die Betätigung der Bremsklötze 6 erfolgt durch einen Bremszylinder 8, der über den Bremssattel 5a mit dem Bremsrahmen 5 verbunden ist.

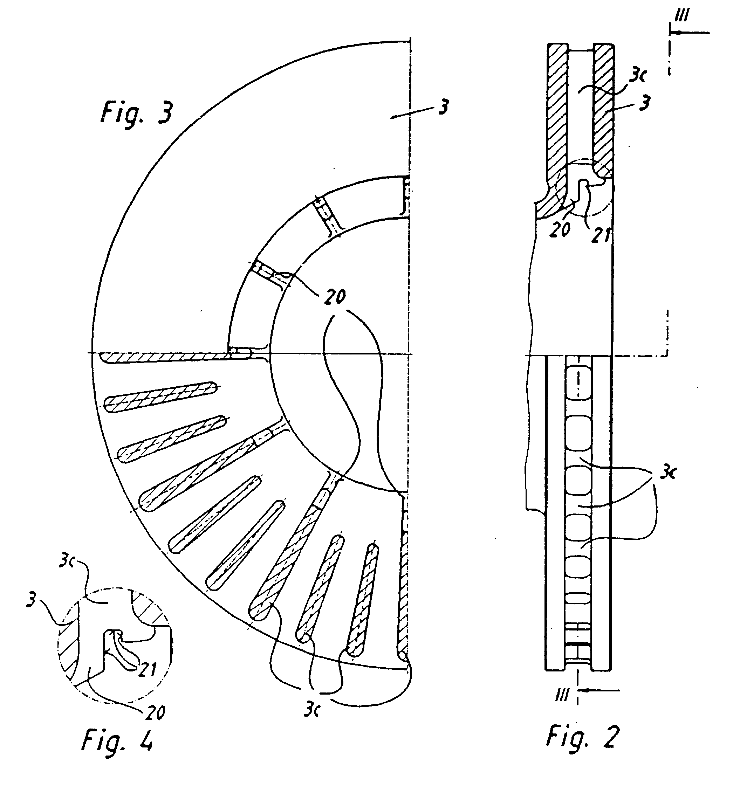

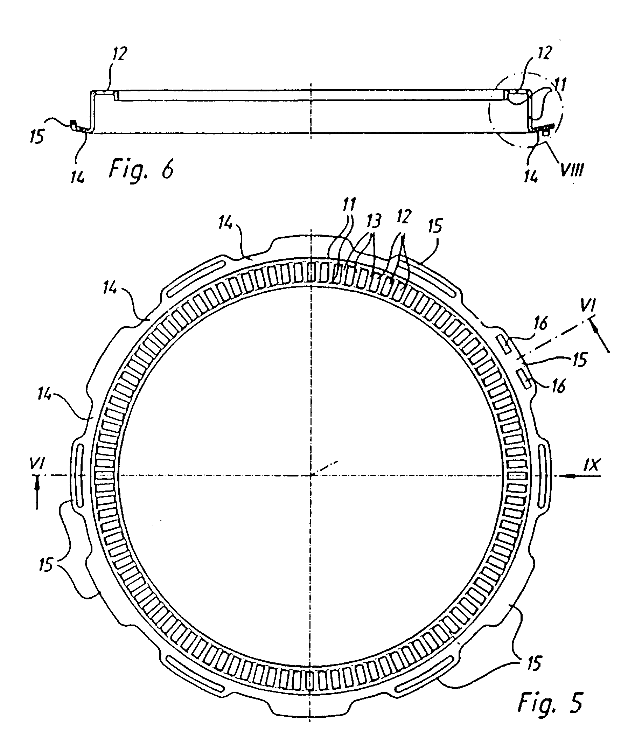

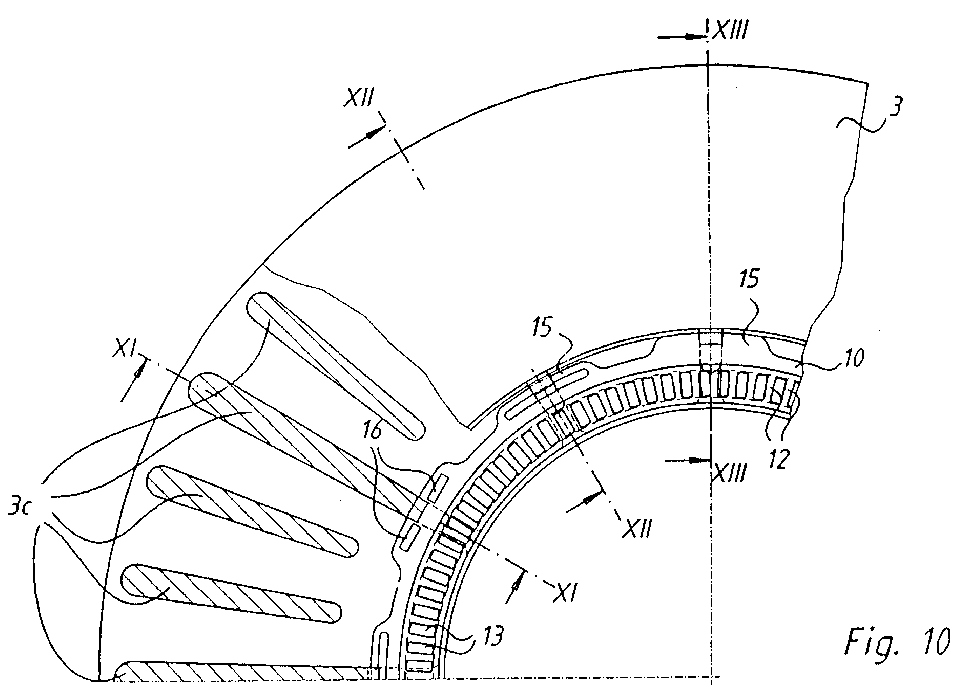

Um die Drehzahl und/oder die Drehrichtung der Felge 4 zu erkennen, ist am Bremsrahmen 5 ein Sensor 9 angeordnet, der mit einem Polring 10 zusammenwirkt, der beim Ausführungsbeispiel nach Fig. 1 an der Bremsscheibe 3 angeordnet ist. Die Ausbildung der Bremsscheibe 3 zur Aufnahme des Polringes 10 ist in den Fig. 2 bis 4 dargestellt. Die Ausbildung eines Ausführungsbeispieles des Polringes 10 ergibt sich aus den Fig. 5 bis 9. Vergrößerte Darstellungen der Verbindung zwischen Polring 10 und Bremsscheibe 3 zeigen die Fig. 10 bis 13.

Die beim Ausführungsbeispiel als innenbelüftete Bremsscheibe im Gießverfahren hergestellte Bremsscheibe 3 hat innerhalb des Belüftungskanals radial verlaufende, stegartige Verbindungsteile 3c, von denen beim Ausführungsbeispiel jedes dritte zur Drehachse hin zu einem Steg 20 verlängert ist. In jedem dieser Stege 20 ist eine Nut 21 ausgebildet, die vergrößert in Fig. 4 dargestellt ist. In diese Nut 21 wird der Polring 10 eingesetzt, der anhand eines Ausführungsbeispiels in den Fig. 5 bis 9 dargestellt ist.

Der aus Blech ausgestanzte und tiefgezogene Polring 10 umfaßt einen im Querschnitt L-förmigen Ringkörper 11, der zur Ausbildung von Polstegen 12 mit Aussparungen 13 versehen ist, die durch ihre Relativbewegung zum feststehenden Sensor 9 einen Impuls erzeugen, der zur Erkennung der Drehzahl und/oder der Drehrichtung des Rades verwendet wird. An den etwa in axialer Richtung verlaufenden längeren Schenkel des Ringkörpers 11 schließt sich ein etwa rechtwinklig abstehender, in radialer Richtung verlaufender Flansch 14 an, der beim Ausführungsbeispiel mit einer der Anzahl der Stege 20 entsprechenden Zahl von Vorsprüngen 15 versehen ist, die in der Art eines Bajonettes mit den Stegen 20 zusammenwirken.

Zur Montage des Polringes 10 wird dieser derart an die Bremsscheibe 3 angesetzt, daß seine Vorsprünge 15 zwischen den Stegen 20 liegen. Durch Verdrehen in Umfangsrichtung werden die Vorsprünge 15 in die Nuten 21 der Stege 20 eingeführt, so daß sich der in den Fig. 10 bis 13 dargestellte Montagezustand ergibt.

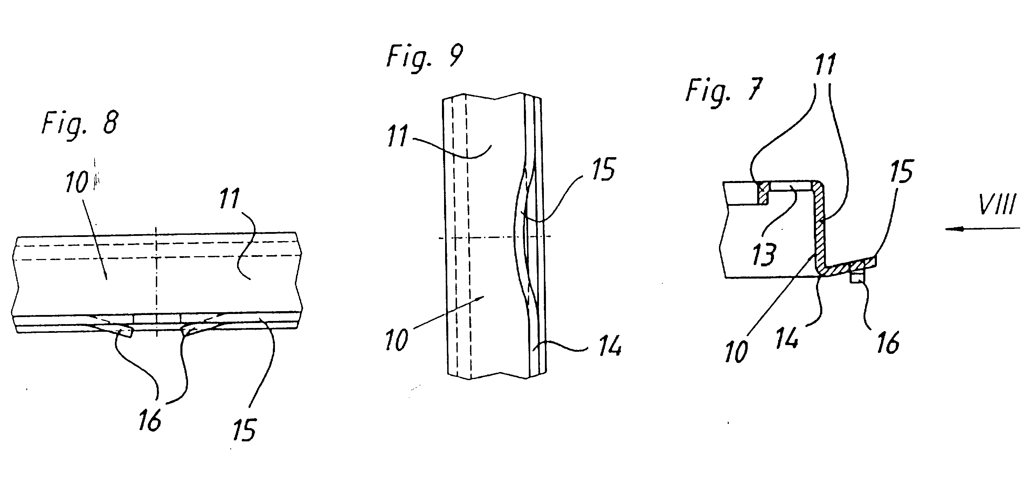

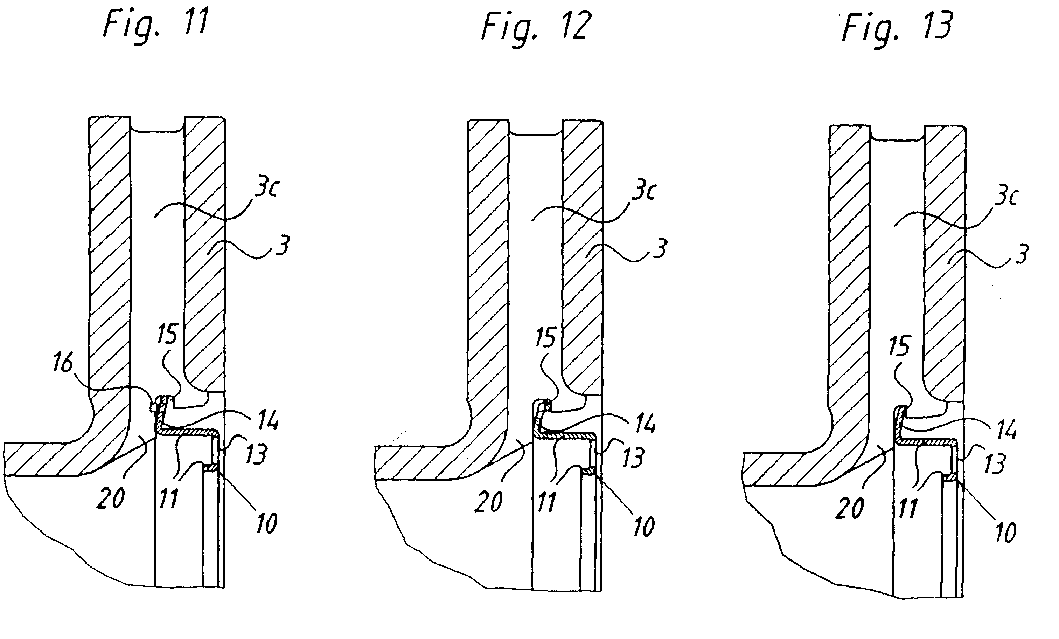

In diesem Zustand erfolgt eine Positionierung des Polringes 10 in radialer Richtung durch Anlage der Mantelfläche der Vorsprünge 15 im Grund der Nuten 21, wie dies insbesondere die Fig. 13 zeigt. Durch eine federnde Ausbildung mindestens einiger der Vorsprünge 15 wird gleichzeitig eine Positionierung des Polringes 10 in axialer Richtung erreicht; beim Ausführungsbeispiel ist zu diesem Zweck jeder zweite Vorsprung 15 bogenartig verformt, wie dies die Fig. 9 zeigt. Hierdurch liegt der Flansch 14 bzw. der Vorsprung 15 des Polringes 10 an beiden gegenüberliegenden Wänden der Nut 21 an, so daß der Polring 10 in axialer Richtung festgelegt wird.

Mindestens ein Vorsprung 15 des Polringes 10 ist mit federzungenartigen Ausstanzungen 16 versehen, die mit ihren gegeneinanderweisenden Stirnflächen an gegenüberliegenden Seiten des zugehörigen Steges 20 anliegen und auf diese Weise den Polring 10 gegen ein unbeabsichtigtes Verdrehen aus der Montageposition sichern. Sofern der Polring 10 von der Bremsscheibe 3 abgenommen werden soll, reicht es aus, eine der federnden Ausstanzungen 16 zurückzudrücken und den Polring 10 soweit zu verdrehen, daß die Vorsprünge 15 zwischen den Stegen 20 liegen, so daß der Polring 10 insgesamt in axialer Richtung von der Bremsscheibe 3 abgenommen werden kann.

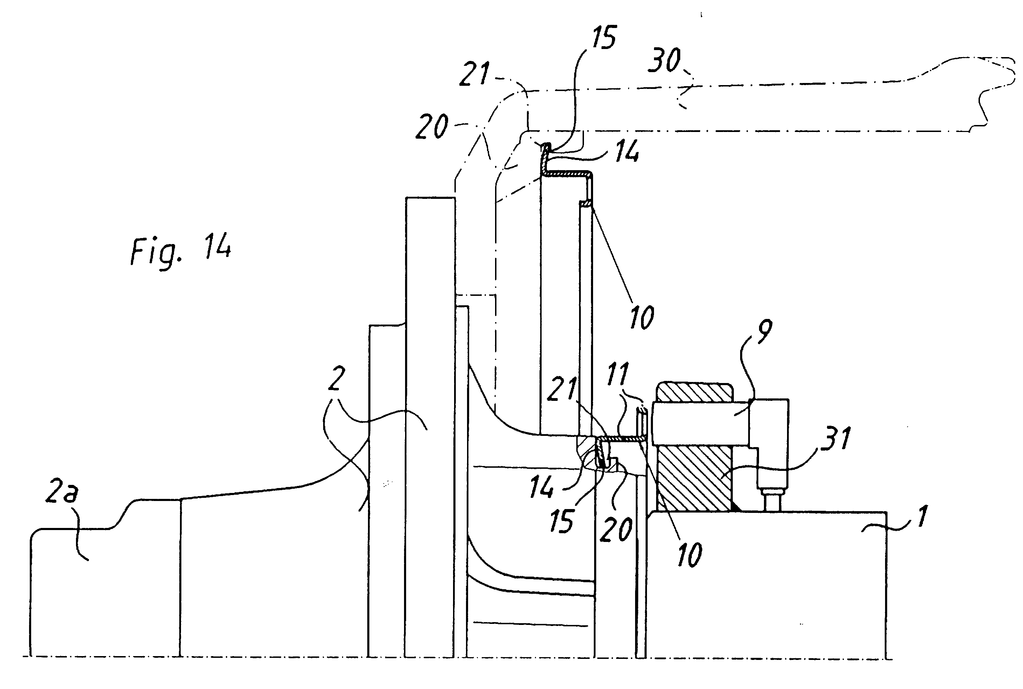

In Fig. 14 ist dargestellt, daß der in den Fig. 2 bis 4 dargestellte Polring 10 nicht nur an einer Bremsscheibe 3, sondern auch an einer Bremstrommel 30 bzw. in entsprechender Ausgestaltung auch an der Radnabe 2 in der voranstehend beschriebenen Weise angeordnet werden kann.

Die Fig. 14 zeigt in einer der Fig. 1 entsprechenden Weise einen Teil eines Achskörpers 1 und einer an diesem drehbar gelagerten Radnabe 2 mit Lagerkappe 2a. Außerdem ist der an einem Träger 31 angeordnete Sensor 9 zu erkennen. Bei dem mit ausgezogenen Linien dargestellten zweiten Ausführungsbeispiel ist der radial nach innen weisende Flansch 14 des Polringes 10 wiederum mit Vorsprüngen 15 versehen, die diesmal in Nuten 21 von Stegen 20 eingreifen, die an der innenliegenden Stirnfläche der Radnabe 2 ausgebildet sind. Es ergibt sich demgemäß eine der ersten Ausführungsform entsprechende Ausgestaltung, wobei lediglich die Zuordnung von Flansch 14 zum Ringkörper 11 und die Lage der Nuten 21 von der voranstehend beschriebenen Ausführungsform abweicht.

Mit strichpunktierten Linien zeigt Fig. 14 schließlich eine Bremstrommel 30, die in geeigneter Weise an der Radnabe 2 befestigt und mit radial verlaufenden Stegen 20 versehen ist. Jeder dieser Stege 20 weist wiederum eine Nut 21 auf, die mit am Flansch 14 des Polringes 10 ausgebildeten Vorsprüngen 15 bajonettartig zusammenwirkt. Es ergibt sich demgemäß eine dem ersten Ausführungsbeispiel entsprechende Ausgestaltung für die Anordnung des Polringes 10 an einer Bremstrommel 30.

### Bezugszeichenliste:

- 1: Achskörper
- 2: Radnabe
- 2a: Lagerkappe
- 2b: Radbolzen
- 3: Bremsscheibe
- 3a: Nabenflansch
- 3b: Befestigungsschraube
- 3c: Verbindungsteil
- 4: Felge
- 5: Bremsrahmen
- 5a: Bremssattel
- 6: Bremsklotz
- 6a: Bremsbelag
- 7: Haltefeder
- 8: Bremszylinder
- 9: Sensor
- 10: Polring
- 11: Ringkörper
- 12: Polsteg
- 13: Aussparung
- 14: Flansch
- 15: Vorsprung
- 16a: Ausstanzung
- 20: Steg
- 21: Nut
- 30: Bremstrommel
- 31: Träger

## Patentansprüche

1. Vorrichtung zur Impulserzeugung an Fahrzeugrädern, insbesondere für die Drehzahl- und/oder Drehrichtungserkennung, mittels eines Sensors und eines Polringes, der mit einer radial verlaufenden Planfläche zur axialen Anlage an einem mit dem Rad drehbar gelagerten Teil der Radlagerung, insbesondere an der Radnabe, Bremstrommel oder Bremsscheibe, versehen ist,
**dadurch gekennzeichnet,**
daß das drehbar gelagerte Teil (2,3,30) der Radlagerung mit einer Mehrzahl von radial verlaufenden Stegen (20) und mit jeweils einer in jedem Steg (20) ausgebildeten, Anlageflächen für den Polring (10) aufweisenden Nut (21) ausgebildet ist und daß der Polring (10) mit bajonettartigen Vorsprüngen (15) zur radialen und axialen Positionierung und Lagesicherung innerhalb der Nuten (21) versehen ist.

2. Vorrichtung nach Anspruch 1, dadurch gekennzeichnet, daß die Vorsprünge (15) an einem etwa radial verlaufenden Flansch (14) des Polringes (10) ausgebildet sind und eine in Umfangsrichtung kleinere Erstreckung als der Abstand zwischen den Stegen (20) aufweisen.

3. Vorrichtung nach Anspruch 1 oder 2, dadurch gekennzeichnet, daß die Positionierung des Polringes (10) in radialer Richtung durch Anlage der Mantelfläche mindestens einige der Vorsprünge (15) im Grund der jeweiligen Nut (21) erfolgt.

4. Vorrichtung nach mindestens einem der Ansprüche 1 bis 3, dadurch gekennzeichnet, daß die Positionierung des Polringes (10) in axialer Richtung durch eine federnde Ausbildung mindestens einiger Vorsprünge (15) erfolgt.

5. Vorrichtung nach Anspruch 4, dadurch gekennzeichnet, daß mindestens einige Vorsprünge (15) bogenartig verformt sind.

6. Vorrichtung nach mindestens einem der Ansprüche 1 bis 5, dadurch gekennzeichnet, daß mindestens ein Vorsprung (15) mit federzungenartigen Ausstanzungen (16) versehen ist, die in montiertem Zustand mit ihren gegeneinanderweisenden Stirnflächen an gegenüberliegenden Seiten des zugehörigen Steges (20) anliegen.

## Claims

1. Device for pulse generation on vehicle wheels, in particular for the detection of rotational speed and/or direction of rotation, by means of a sensor and a pole ring which is provided with a radially extending plane face for bearing axially on a part of the wheel mounting which is mounted so to be rotatable together with the wheel, in particular on the wheel hub, brake drum or brake disc, characterized in that the rotatably mounted part (2, 3, 30) of the wheel mounting is designed with a plurality of radially extending webs (20) and, in each case, with a groove (21) designed in each web (20) and having bearing faces for the pole ring (10), and in that the pole ring (10) is provided with bayonet-like projections (15) in order to be positioned and secured in position radially and axially within the grooves (21).

2. Device according to Claim 1, characterized in that the projections (15) are designed on an approximately radially extending flange (14) of the pole ring (10) and have an extent which is smaller in the circumferential direction than the distance between the webs (20).

3. Device according to Claim 1 or 2, characterized in that the pole ring (10) is positioned in the radial direction by the bearing of the generated surface of at least some of the projections (15) in the bottom of the respective groove (21).

4. Device according to at least one of Claims 1 to 3, characterized in that the pole ring (10) is positioned in the axial direction as a result of the resilient design of at least some projections (15).

5. Device according to Claim 4, characterized in that at least some projections (15) have an arcuate shape.

6. Device according to at least one of Claims 1 to 5, characterized in that at least one projection (15) is provided with punched-out portions (16) which resemble spring tongues and which, in the assembled state, bear with their mutually confronting end faces on opposite sides of the associated web (20).

## Revendications

1. Dispositif pour produire des impulsions sur des roues de véhicules, particulièrement pour l'identification du nombre de tours et/ou du sens de rotation, au moyen d'un capteur et d'un anneau polaire qui est pourvu d'une surface plane se développant radialement pour se placer axialement contre une pièce du logement de la roue, positionnée de façon à pouvoir tourner avec la roue, notamment sur le moyeu de la roue, sur le tambour de frein ou sur le disque de freinage,
caractérisé en ce que
la pièce (2, 3, 30) du logement de la roue, positionnée de manière à pouvoir tourner avec la roue, est construite avec plusieurs traverses (20) se développant radialement et avec une rainure (21) façonnée respectivement dans chaque traverse (20) et présentant des surfaces contre lesquelles peut se placer l'anneau polaire (10), et en ce que l'anneau polaire (10) est pourvu de parties en saillie en forme de baïonnette (15) pour le positionnement radial et axial et garantir cette position à l'intérieur des rainures (21).

2. Dispositif selon la revendication 1, caractérisé en ce que les parties en saillie (15) sont formées sur un flasque (14), qui s'étend sensiblement radialement, de l'anneau polaire (10) et en ce qu'elles présentent une dimension plus faible dans la direction du pourtour que la distance entre les traverses (20).

3. Dispositif selon la revendication 1 ou 2, caractérisé en ce que le positionnement de l'anneau polaire (10) en direction radiale se fait par contact de la surface d'enveloppe d'au moins quelques unes des parties saillantes (15) avec le fond de la rainure (21) correspondante.

4. Dispositif selon au moins l'une des revendications de 1 à 3, caractérisé en ce que le positionnement de l'anneau polaire (10) en direction axiale se fait par une configuration flexible d'au moins quelques unes des parties en saillie (15).

5. Dispositif selon la revendication 4, caractérisé en ce qu'au moins quelques unes des parties en saillie (15) sont déformées en forme d'arc.

6. Dispositif selon au moins l'une des revendications de 1 à 5, caractérisé en ce qu'au moins une partie en saillie (15) est pourvue de découpes (16) en forme de lames souples, lesquelles se placent, à l'état assemblé, avec leurs fronts qui se font face, contre les faces opposées de la traverse (20) correspondante.
